# EUROPEAN PATENT APPLICATION

(11) **EP 4 312 359 A1**
(43) Date of publication of application: **31.01.2024**
(21) Application number: 22186677.5
(22) Date of filing: 25.07.2022
(51) Int. Cl.: H02M 3/00, H02M 3/335, H05B 45/3725

(54) **LCC CONVERTER FOR AN LED LOAD, AND LED LUMINAIRE**

(71) Applicant: Tridonic GmbH & Co. KG, 6851 Dornbirn (AT)
(72) Inventor: Maldoner, Jakob, 6850 Dornbirn (AT); Marte, Patrick, 6850 Dornbirn (AT); Walch, Patrick, 6850 Dornbirn (AT); Egle, Manuel, 6850 Dornbirn (AT)
(74) Representative: Rupp, Christian

(57) **Abstract**

Disclosed is an LCC converter (1) for driving an LED load. The converter (1) comprises a transformer (13), being operable to electrically isolate a primary side (11, 12) and a secondary side (14, 15) of the converter (1). The primary side (11, 12) comprises a half bridge (11) of serially connected switches (111, 112), being mutually exclusively operable in accordance with a half-bridge switching frequency, and an LCC resonant circuit (12). The secondary side (14, 15) comprises a rectifier circuit (14). The converter (1) further comprises a control circuit (16), being operable to generate a shunt switching signal (22); and a shunt switch (17), being arranged upstream of the rectifier circuit (14), and being operable to short-circuit the LCC resonant circuit (12) in accordance with the shunt switching signal (22) during ongoing operation of the half bridge (11). The short-circuiting of the LCC resonant circuit (12) avoids the negative side effects of shutting down the half bridge (11) of the resonant converter.

## Description

### Technical Field

The present disclosure relates to lighting technology, and in particular to an LCC converter for driving an LED load, and to an LED luminaire.

### Background Art

In LCC-type resonant converters, there is a range of dimming levels which may be achieved via changing a frequency of their switching stage (typically a half bridge of serially connected switches), since the converted power changes depending on a frequency offset between an operating point and a resonance point of the converter.

Even lower dimming levels may be achieved by shutting down the switching stage, although it is rather complex to shut down a resonant circuit without negative side effects, like secondary side current overshoot at switching off or big secondary side current ripple

### Summary

The present disclosure therefore aims to improve a dimming of LCC-type resonant converters of the background art. This is achieved by the embodiments as defined by the appended independent claims. Preferred embodiments are set forth in the dependent claims and in the following description and drawings.

A first aspect of the present disclosure relates to an LCC converter for driving an LED load. The converter comprises a transformer, being operable to electrically isolate a primary side (also called input side) and a secondary side (also called output side) of the converter. The primary side comprises a half bridge of serially connected switches, being mutually exclusively operable in accordance with a half-bridge switching frequency, and an LCC resonant circuit. The secondary side comprises a rectifier circuit. The converter further comprises a control circuit, being operable to generate a shunt switching signal; and a shunt switch, being arranged upstream of the rectifier circuit, and being operable to short-circuit the LCC resonant circuit in accordance with the shunt switching signal during ongoing operation of the half bridge.

The shunt switch may be operable to short-circuit the LCC resonant circuit on the primary side of the converter.

The shunt switch may be arranged between the LCC resonant circuit and an primary-side winding of the transformer.

The shunt switch may be operable to short-circuit the LCC resonant circuit via an auxiliary winding of the transformer.

The shunt switch may be operable to short-circuit the LCC resonant circuit on the secondary side of the converter.

The shunt switch may be arranged between the transformer and the rectifier circuit.

The rectifier circuit may comprise a diode bridge.

The filter circuit may comprise a smoothing capacitor.

The control circuit may be operable to generate the shunt switching signal in accordance with the half-bridge switching frequency.

The control circuit may be operable to generate the shunt switching signal in synchronism with the half-bridge switching frequency.

The control circuit may be operable to generate the shunt switching signal in accordance with a clock frequency of the control circuit, and the clock frequency may depend on the half-bridge switching frequency.

The half-bridge switching frequency may exceed a frequency of the shunt switching signal by a factor of 10 to 100.

The half-bridge switching frequency may comprise 500 to 1.000 kHz, and the frequency of the shunt switching signal may comprise 10 to 50 kHz.

The shunt switching signal may comprise a pulse width modulation, PWM, signal; and
a duty cycle of the PWM signal may be indicative of a dimming level of the LED load.

A second aspect of the present disclosure relates to an LED luminaire, comprising an LED load and an LCC converter of the first aspect or any of its implementations connected to the LED load.

### Advantageous Effects

LCC-type resonant converters act like a current source. In other words, LCC-type resonant converters are tolerant to short-circuiting. As such, a dimming of an LED load may be achieved by temporary short-circuiting of the resonant circuit in accordance with a pulse width modulated (PWM) signal. This avoids the negative side effects of shutting down the switching stage of the resonant converter.

The technical effects and advantages described equally apply to the LCC converter according to the first aspect and the LED luminaire according to the second aspect.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: schematically illustrates the building blocks of a known resonant converter for driving an LED load;
- FIG. 2: illustrates an exemplary implementation of the known resonant converter of FIG. 1;
- FIG. 3: illustrates a building block comprising a shunt switch in accordance with the present disclosure;
- FIGs. 4-7: illustrate schematically various arrangements of building blocks of an LCC converter in accordance with the present disclosure;
- FIG. 8: illustrates an impact of the shunting / short-circuiting of the LCC resonant circuit on a secondary-side current (i.e., load / LED current) of the LCC converter; and
- FIG. 9: illustrates an impact of the shunting / short-circuiting of the LCC resonant circuit on a primary-side current (i.e., current through resonant inductor) of the LCC converter; and
- FIG. 10: illustrates an exemplary implementation in accordance with the present disclosure.

### Detailed Descriptions of Drawings

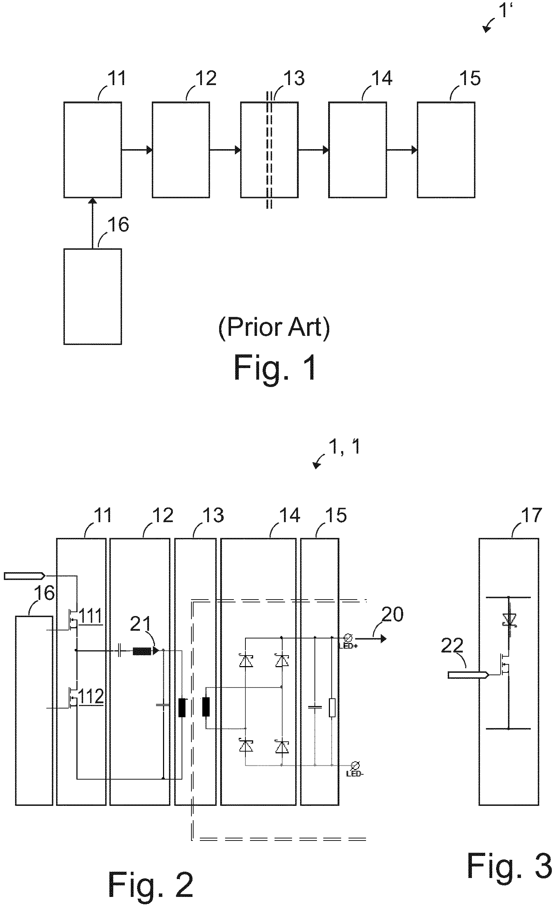

FIG. 1 schematically illustrates the building blocks of a known resonant converter 1' for driving an LED load;

The converter 1' comprises a transformer 13, being operable to electrically isolate a primary side 11, 12 and a secondary side 14, 15 of the converter 1'. The insulation barrier indicated in the transformer building block 13 may be a Safety Extra Low Voltage (SELV) insulation barrier.

Extra Low Voltage (ELV) as used herein may refer to an electric supply voltage in a range which carries a low risk of dangerous electrical shock, in accordance with various definitions of the extra-low voltage. Safety Extra Low Voltage (SELV) as used herein may refer to electrical protective-separation (i.e., double insulation, reinforced insulation or protective screening) from all circuits that might carry higher voltages. A design of SELV circuits typically involves an isolating transformer, guaranteed minimum distances between conductors and electrical insulation barriers.

The primary side 11, 12 of the converter 1' comprises a network 11 of (on-off) switches, being operable in accordance with a switching frequency. The network 11 is operable to turn a direct current (DC) input voltage into a square wave voltage.

The primary side 11, 12 of the converter 1' further comprises a resonant circuit 12, i.e., a network of inductors and capacitors being designed to resonate at a particular frequency of the square wave voltage. Typical implementations of the resonant circuit 12 include an LLC resonant circuit or an LCC resonant circuit. An LLC-type resonant converter is by default behaving like a voltage source, and an LCC-type resonant converter is behaving by default as a current source on its output.

The secondary side 14, 15 of the converter 1' comprises a rectifier circuit 14 and a filter circuit 15.

The converter 1' further comprises a control circuit 16, being operable to generate the switching frequency for the network 11 of switches.

FIG. 2 illustrates an exemplary implementation of the resonant converter 1' of FIG. 1;

The resonant converter 1' is designed for driving an LED load.

The converter 1' comprises a transformer 13, which may include a primary-side winding and a secondary-side winding, the transformer 13 being operable to electrically isolate an primary side 11, 12 and an secondary side 14, 15 of the converter 1'.

The primary side 11, 12 comprises a half bridge 11 of serially connected switches 111, 112, being mutually exclusively operable in accordance with a half-bridge switching frequency. Across the half bridge 11, a DC bus voltage V_{BUS} of e.g. 400V may be applied.

The converter 1' further comprises a control circuit 16, being operable to provide the half-bridge switching frequency.

The primary side 11, 12 further comprises an LCC resonant circuit 12, which may include a series connection of a first resonant capacitor and a resonant inductor connected in series to the primary-side winding of the transformer 13, and a second resonant capacitor connected in parallel to the primary-side winding of the transformer 13.

An primary-side current through the resonant inductor is identified by reference sign 21.

The secondary side 14, 15 further comprises a rectifier circuit 14, which may include a diode bridge such as a full wave rectifier formed of four diodes.

The secondary side 14, 15 may further comprise a filter circuit 15, which may include a smoothing capacitor.

An secondary-side current through an LED load is identified by reference sign 20.

FIG. 3 illustrates a building block comprising a shunt switch 17 in accordance with the present disclosure;

A shunt switch as used herein is an electric device being operable to create a low-resistance path for electric current (i.e., a short circuit) in accordance with a shunt switching signal, to allow the electric current to pass around another point in the circuit.

The shunt switch 17 extends between a high-side rail of the converter 1 being associated with a first electric potential and a low-side rail of the converter 1 being associated with a second electric potential being lower than the first electric potential.

A diode may be connected in series to the shunt switch 17 to enforce that the second electric potential is always lower than the first electric potential.

The shunt switch 17 is operable to short-circuit the high-side rail and the low-side rail in accordance with a shunt switching signal 22.

The shunt switching signal 22 may comprise a pulse width modulation, PWM, signal, and a duty cycle of the PWM signal may be indicative of a dimming level of the LED load. As the shunt switch 17 in a conducting state allows the electric current to bypass an output port of the converter 1, an increasing duty cycle *D* = *(T_{ON})*/*(T_{ON}*+*T_{OFF})* results in less LED current.

The shunt switching signal 22 may be termed a "low-frequency" PWM signal, since the half-bridge switching frequency may exceed a frequency of the shunt switching signal 22 by a factor of 10 to 100. In particular, the half-bridge switching frequency may comprise 500 to 1.000 kHz, and the frequency of the shunt switching signal 22 may comprise 10 to 50 kHz.

The shunt switch 17 has to be placed upstream of the rectifier circuit 14 to prevent that the shunt switch 17 is discharging the filter circuit 15.

When arranging the shunt switch 17 upstream of the rectifier circuit 14 in the implementation of FIG. 2, the shunt switch 17 is operable to short-circuit the LCC resonant circuit 12 in accordance with the shunt switching signal 22 during ongoing operation of the half bridge 11.

The control circuit 16 may be operable to generate the shunt switching signal 22 in accordance with the half-bridge switching frequency, and in particular in synchronism with the half-bridge switching frequency.

To this end, the control circuit 16 may be operable to generate the shunt switching signal 22 in accordance with a clock frequency of the control circuit 16, and the clock frequency may depend on the half-bridge switching frequency. In other words, the clock frequency of the control circuit 16 may be derived from the half-bridge switching frequency, and the shunt switching signal 22 may be derived from the clock frequency of the control circuit 16.

A synchronism of the half-bridge switching frequency and the frequency of the shunt switching signal 22 may prevent flicker (i.e., a visible change in brightness of a light source, such as the LED load, due to rapid fluctuations in the voltage of its power supply) and steps in the dimming curve.

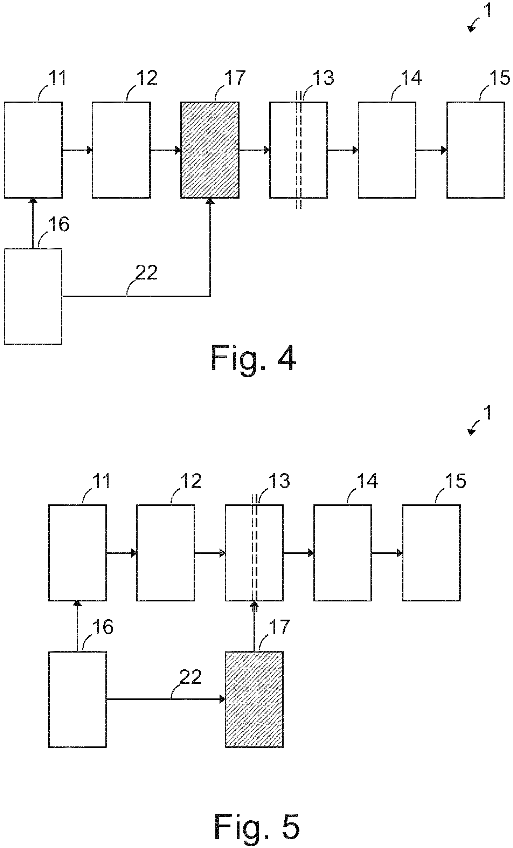

FIG. 4 schematically illustrates a first arrangement of building blocks of an LCC converter 1 in accordance with the present disclosure;

The building blocks 11 - 16 of the LCC converter 1 in accordance with the present disclosure correspond to those of the resonant converter 1' explained in connection with FIG. 2, and the building block 17 corresponds to the implementation of FIG. 3.

In accordance with the first arrangement shown in FIG. 4, the control circuit 16 is operable to generate the shunt switching signal 22, and the LCC converter 1 further comprises the shunt switch 17 (see building block 17 being cross-hatched for better visibility), being arranged upstream of the rectifier circuit 14, and being operable to short-circuit the LCC resonant circuit 12 on the primary side 11, 12 of the converter 1 in accordance with the shunt switching signal 22.

More specifically, the shunt switch 17 may be arranged between the LCC resonant circuit 12 and the primary-side winding of the transformer 13, and may be operable to short-circuit the high-side and low-side rails extending between the second resonant capacitor of the LCC resonant circuit 12 and the primary-side winding of the transformer 13, in accordance with the shunt switching signal 22.

The shunt switch 17 is therefore operable to short-circuit the LCC resonant circuit 12 during ongoing operation of the half bridge 11.

FIG. 5 schematically illustrates a second arrangement of building blocks of an LCC converter 1 in accordance with the present disclosure;

The building blocks 11 - 16 of the LCC converter 1 in accordance with the present disclosure correspond to those of the resonant converter 1' explained in connection with FIG. 2, and the building block 17 corresponds to the implementation of FIG. 3.

In accordance with the second arrangement shown in FIG. 5, the control circuit 16 is operable to generate the shunt switching signal 22, and the LCC converter 1 further comprises the shunt switch 17 (see cross-hatched building block 17), being arranged upstream of the rectifier circuit 14, and being operable to short-circuit the LCC resonant circuit 12 via an auxiliary winding of the transformer 13 in accordance with the shunt switching signal 22.

In more detail, the shunt switch 17 may be connected to the auxiliary winding of the transformer 13 via a further diode bridge (corresponding in design to the diode bridge of the rectifier 14), and may be operable to short-circuit the high-side and low-side rails of the further diode bridge in accordance with the shunt switching signal 22.

The shunt switch 17 is therefore operable to short-circuit the LCC resonant circuit 12 during ongoing operation of the half bridge 11.

This second arrangement may particularly simplify the design of the building block 17.

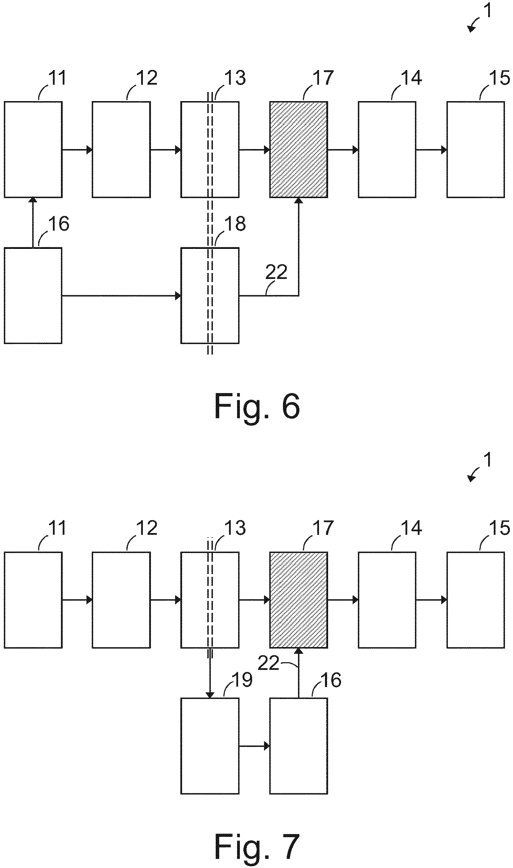

FIG. 6 schematically illustrates a third arrangement of building blocks of an LCC converter 1 in accordance with the present disclosure;

The building blocks 11 - 16 of the LCC converter 1 in accordance with the present disclosure correspond to those of the resonant converter 1' explained in connection with FIG. 2, and the building block 17 corresponds to the implementation of FIG. 3.

In accordance with the third arrangement shown in FIG. 6, the control circuit 16 is operable to generate the shunt switching signal 22 being transmitted across the insulation barrier to the secondary side 14, 15 of the LCC converter 1 by means of an opto coupler 18. The LCC converter 1 further comprises the shunt switch 17 (see cross-hatched building block 17), being arranged upstream of the rectifier circuit 14, and being operable to short-circuit the LCC resonant circuit 12 on the secondary side 14, 15 of the converter 1.

That is to say, the shunt switch 17 may be arranged between the transformer 13 and the rectifier circuit 14. The shunt switch 17 may be operable to short-circuit the high-side and low-side rails extending between the transformer 13 and the diode bridge of the rectifier circuit 14 in accordance with the shunt switching signal 22.

The shunt switch 17 is thus operable to short-circuit the LCC resonant circuit 12 during ongoing operation of the half bridge 11.

FIG. 7 schematically illustrates a fourth arrangement of building blocks of an LCC converter 1 in accordance with the present disclosure;

The building blocks 11 - 16 of the LCC converter 1 in accordance with the present disclosure correspond to those of the resonant converter 1' explained in connection with FIG. 2, and the building block 17 corresponds to the implementation of FIG. 3.

In accordance with the fourth arrangement shown in FIG. 7, the control circuit 16 may be arranged on the secondary side 14, 15 of the LCC converter 1, may be powered by a low-voltage supply 19 fed by the transformer 13, and may be operable to generate the shunt switching signal 22 already on the secondary side 14, 15.

The LCC converter 1 further comprises the shunt switch 17 (see cross-hatched building block 17), being arranged upstream of the rectifier circuit 14, and being operable to short-circuit the LCC resonant circuit 12 on the secondary side 14, 15 of the converter 1. The fourth arrangement of the shunt switch 17 shown in FIG. 7 thus corresponds to the third arrangement shown in FIG. 6.

The shunt switch 17 is hence operable to short-circuit the LCC resonant circuit 12 during ongoing operation of the half bridge 11.

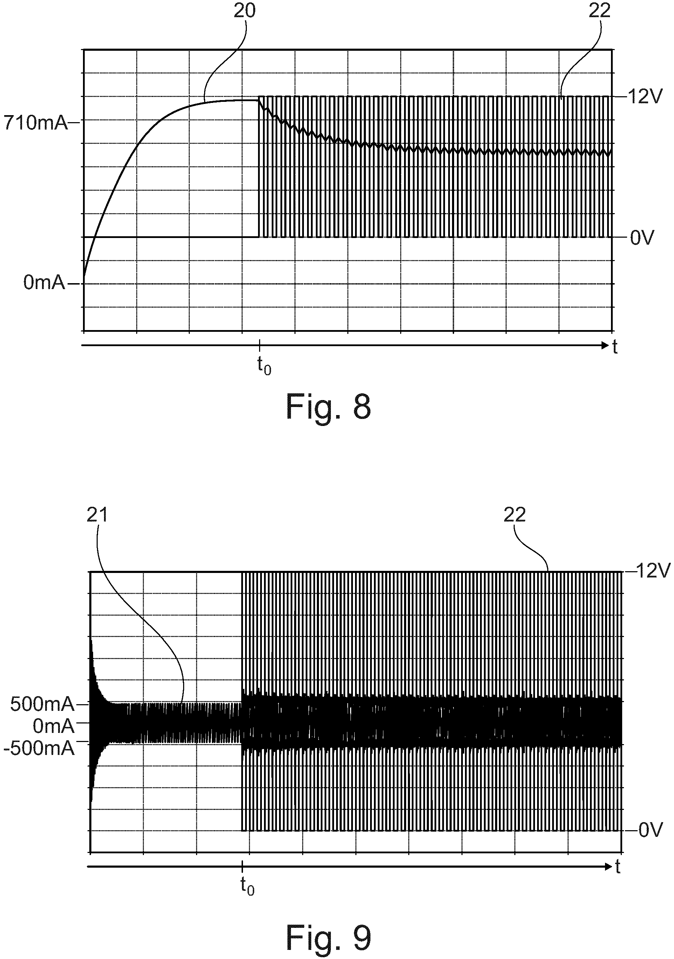

FIG. 8 illustrates an impact of the shunting / short-circuiting of the LCC resonant circuit 12 on an secondary-side current 20 (i.e., load / LED current) of the LCC converter 1; and

The underlying converter 1 corresponds in design to the first arrangement of FIG. 4 (i.e., the shunt switch 17 being arranged upstream of the rectifier circuit 14 on the primary side 11, 12 of the converter 1).

With reference to the scale to the left of FIG. 8, the secondary-side current 20 is shown as rising from 0mA to an asymptotic value of about 710mA.

At time instant *t₀,* the control circuit 16 starts generating the shunt switching signal 22. The shunt switching signal 22 may comprise a PWM signal, and a duty cycle of the PWM signal may be indicative of a dimming level of the LED load.

With reference to the scale to the right of FIG. 8, the shunt switching signal 22 alternates between values of 12V and 0V, respectively.

As can be seen, every time the shunt switch 17 is closed (conducting), no more electrical power is supplied to the smoothing capacitor of the filter circuit 15, and the smoothing capacitor gets discharged by the secondary-side current 20 until the shunt switch 17 is open (non-conducting) again.

In accordance with the shunt switching signal 22 and its duty cycle, the secondary-side current 20 is shown as decaying from about 710mA to an asymptotic value of about 510 mA.

FIG. 9 illustrates an impact of the shunting / short-circuiting of the LCC resonant circuit 12 on an primary-side current 21 (i.e., current through the resonant inductor) of the LCC converter 1.

The underlying converter 1 still corresponds in design to the first arrangement of FIG. 4.

With reference to the scale to the left of FIG. 9, the primary-side current 21 is shown as oscillating between values of about +/-500mA.

At time instant *t₀,* the control circuit 16 starts generating the shunt switching signal 22. The shunt switching signal 22 may comprise a PWM signal, and a duty cycle of the PWM signal may be indicative of a dimming level of the LED load.

With reference to the scale to the right of FIG. 9, the shunt switching signal 22 alternates between values of 12V and 0V, respectively.

As can be seen, the primary-side current 21 (through the resonant inductor) remains substantially the same when the resonant circuit 12 is short(circuit)ed by the shunt switch 17, apart from parasitic effects. This is because the LCC-type resonant converter 1 behaves like a current source, and a current source can handle a short circuit in a similar way like a voltage source can handle an open load.

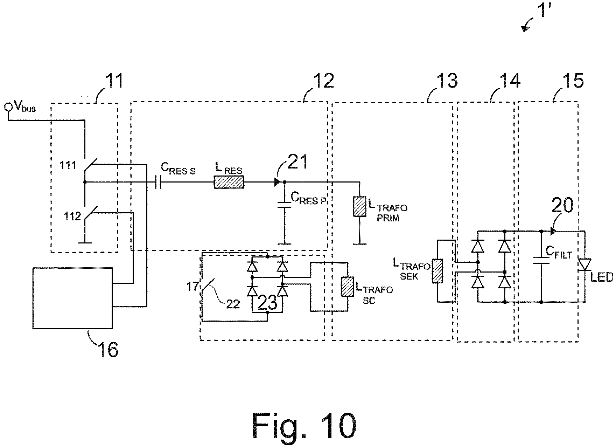

FIG. 10 illustrates another exemplary implementation of the resonant converter 1' of FIG. 1;

The resonant converter 1' is designed for driving an LED load.

The converter 1' comprises a transformer 13, which may include a primary-side winding L_TRAFO_PRIM and a secondary-side winding L_TRAFO_SEK, the transformer 13 being operable to electrically isolate a primary side 11, 12 and a secondary side 14, 15 of the converter 1'. The primary-side winding L_TRAFO_PRIM and the secondary-side winding L_TRAFO_SEK may be electro-magnetically coupled.

The primary side 11, 12 comprises a half bridge 11 of serially connected switches 111, 112, being mutually exclusively operable in accordance with a half-bridge switching frequency. Across the half bridge 11, a DC bus voltage V_{BUS} of e.g. 400V may be applied.

The converter 1' further comprises a control circuit 16, being operable to provide the half-bridge switching frequency to control the serially connected switches 111, 112.

The primary side 11, 12 further comprises an LCC resonant circuit 12, which may include a series connection of a first resonant capacitor C_RES_S and a resonant inductor L_RES connected in series to the primary-side winding L_TRAFO_PRIM of the transformer 13, and a second resonant capacitor C_RES_P connected in parallel to the primary-side winding L_TRAFO_PRIM of the transformer 13.

A primary-side current through the resonant inductor is identified by reference sign 21.

The secondary side 14, 15 is connected to the secondary-side winding L_TRAFO_SEK and comprises a rectifier circuit 14, which may include a diode bridge such as a full wave rectifier formed of four diodes.

The secondary side 14, 15 may further comprise a filter circuit 15, which may include a smoothing capacitor C_FILT.

A secondary-side current through an LED load is identified by reference sign 20.

The transformer 13 may further comprise an auxiliary winding L_TRAFO_SC electro-magnetically coupled to the primary-side winding L TRAFO_PRIM and the secondary-side winding L_TRAFO_SEK.

The auxiliary winding L_TRAFO_SC may be connected via a rectification circuit 23 to a shunt switch 17.

Every time the shunt switch 17 is closed (conducting) in accordance with the shunt switching signal 22, the auxiliary winding L_TRAFO_SC will be short-circuited and thus as well the LCC resonant circuit 12 will be short-circuited, and no more electrical power is supplied to the smoothing capacitor of the filter circuit 15, and the smoothing capacitor gets discharged by the secondary-side current 20 until the shunt switch 17 is open (non-conducting) again.

## Claims

1. An LCC converter (1) for driving an LED load, comprising
a transformer (13), being operable to electrically isolate a primary side (11, 12) and a secondary side (14, 15) of the converter (1),
the primary side (11, 12) comprising a half bridge (11) of serially connected switches (111, 112), being mutually exclusively operable in accordance with a half-bridge switching frequency, and an LCC resonant circuit (12);
the secondary side (14, 15) comprising a rectifier circuit (14);
the converter (1) further comprising
a control circuit (16), being operable to generate a shunt switching signal (22); and
a shunt switch (17), being arranged upstream of the rectifier circuit (14), and being operable to short-circuit the LCC resonant circuit (12) in accordance with the shunt switching signal (22) during ongoing operation of the half bridge (11).

2. The LCC converter (1) of claim 1,
the shunt switch (17) being operable to short-circuit the LCC resonant circuit (12) on the primary side (11, 12) of the converter (1).

3. The LCC converter (1) of claim 2,
the shunt switch (17) being arranged between the LCC resonant circuit (12) and an primary-side winding of the transformer (13).

4. The LCC converter (1) of claim 1,
the shunt switch (17) being operable to short-circuit the LCC resonant circuit (12) via an auxiliary winding of the transformer (13).

5. The LCC converter (1) of claim 1,
the shunt switch (17) being operable to short-circuit the LCC resonant circuit (12) on the secondary side (14, 15) of the converter (1).

6. The LCC converter (1) of claim 5,
the shunt switch (17) being arranged between the transformer (13) and the rectifier circuit (14).

7. The LCC converter (1) of claim 6,
the rectifier circuit (14) comprising a diode bridge.

8. The LCC converter (1) of any one of the preceding claims,
the filter circuit (15) comprising a smoothing capacitor.

9. The LCC converter (1) of any one of the preceding claims,
the control circuit (16) being operable to generate the shunt switching signal (22) in accordance with the half-bridge switching frequency.

10. The LCC converter (1) of claim 9,
the control circuit (16) being operable to generate the shunt switching signal (22) in synchronism with the half-bridge switching frequency.

11. The LCC converter (1) of claim 10,
the control circuit (16) being operable to generate the shunt switching signal (22) in accordance with a clock frequency of the control circuit (16),
the clock frequency depending on the half-bridge switching frequency.

12. The LCC converter (1) of any one of the claims 9 to 11,
the half-bridge switching frequency exceeding a frequency of the shunt switching signal (22) by a factor of 10 to 100.

13. The LCC converter (1) of any one of the claims 9 to 12,
the half-bridge switching frequency comprising 500 to 1.000 kHz, and the frequency of the shunt switching signal (22) comprising 10 to 50 kHz.

14. The LCC converter (1) of any one of the preceding claims,
the shunt switching signal (22) comprising a pulse width modulation, PWM, signal; and a duty cycle of the PWM signal being indicative of a dimming level of the LED load.

15. An LED luminaire, comprising
an LED load; and
an LCC converter (1) of any one of the preceding claims connected to the LED load.
